(19) Europäisches Patentamt
European Patent Office
Office européen des brevets

(11) **EP 1 067 518 A2**

(12) **EUROPEAN PATENT APPLICATION**

(43) Date of publication:
**10.01.2001 Bulletin 2001/02**

(51) Int. Cl.[7]: **G11B 5/73**

(21) Application number: **00114552.3**

(22) Date of filing: **06.07.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **08.07.1999 JP 19504199**

(71) Applicant: **SONY CORPORATION**
**Tokyo (JP)**

(72) Inventors:
• **Sato, Satoshi**
  **Shinagawa-ku, Tokyo (JP)**
• **Matsumura, Shinichi**
  **Shinagawa-ku, Tokyo (JP)**

(74) Representative:
**MÜLLER & HOFFMANN Patentanwälte**
**Innere Wiener Strasse 17**
**81667 München (DE)**

(54) **Magnetic recording medium**

(57) A magnetic recording medium is to be provided which is able to achieve a large recording capacity and which has superior running performance and high data recording and readout reliability. To this end, a non-magnetic substrate 1 at least has a first polyester film 4 forming one of the major surfaces and a second polyester film 5 formed on the first polyester film, the first polyester film 4 containing inert particles coarser than inert particles contained in the second polyester film 5. The thickness of the non-magnetic substrate excluding that of the first polyester film is not less than 2.0 μm.

**FIG.1**

**EP 1 067 518 A2**

**Description**

BACKGROUND OF THE INVENTION

Field of the Invention

This invention relates to a magnetic recording medium on one of the major surfaces of which is formed a magnetic film of metal. More particularly, it relates to a magnetic recording medium which may be used with advantage as a large-capacity tape streamer.

Description of Related Art

Recently, as office computers, such as mini-computers or personal computers, are used in increasing numbers, researches into a magnetic tape for recording computer data, as an external recording medium (a so-called tape streamer) are going on briskly. For practically exploiting the magnetic tape for this field of application, it is strongly demanded not only to reduce the size of the computer and to increase the information processing capability, but also to increase the recording capacity in order to achieve the volume of recording and the small size.

As a magnetic recording medium for a video cassette, it is demanded to render the video cassette more compact in size and to prolong the recording time.

Among the requirements for a magnetic recording medium, usability under wider environmental conditions, brought about with the enhanced using environment of the magnetic tape, especially under severely changing temperature and humidity conditions, reliability as to data storage and reliability as to stable data recording and readout following a large number of times of running under elevated speeds, are demanded to meet a higher criterium.

In general, a magnetic tape is made up of a non-magnetic substrate of a flexible material, such as synthetic resin, and a magnetic layer deposited thereon. For achieving the high recording capacity (volumetric recording capacity) as discussed above, it is felt to be effective to use a thin magnetic metal film as a magnetic layer to increase the recording density of the magnetic layer itself and to reduce the total thickness of the magnetic tape. That is, a so-called vapor-deposited tape, obtained on depositing a thin magnetic metal film, on a non-magnetic substrate, is desirable as the magnetic tape.

As the non-magnetic substrate of the vapor-deposited tape, a polyester film, mainly a polyethylene terephthalate film, is used. In particular, as a non-magnetic substrate used in a home video cassette tape, such as an 8-mm tape, a polyethylene terephthalate film, with a thickness of the order of 7 to 10 µm, is used. On the other hand, as a tape streamer for computer data backup, a polyethylene film with a thickness of the order of 5 to 7 µm, is used.

For prolonging the recording time of a magnetic recording medium used in a video tape, such a method which comprises using a non-magnetic substrate composed mainly of polyester, and specifically, a non-magnetic substrate of polyethylene naphthalate, is retained to be desirable, as disclosed for example im Japanese Laying-Open Patent H-6-215350.

In general, for raising the recording density of a magnetic recording medium, it is necessary to smooth its surface to a certain extent to reduce the spacing loss to as small a value as possible. However, if the surface of the magnetic recording medium is excessively planar, head touching or tape running performance is deteriorated. It is therefore necessary to keep optimum surface properties by controlling the minute surface shape.

Moreover, the tendency is towards a higher relative speed between the magnetic head and the magnetic recording medium, such that a high durability magnetic recording medium with small abrasion of the magnetic layer is desirable. In this consideration, it is mandatory to control the minute surface shape of the magnetic recording medium.

On the other hand, if a magnetic layer of a magnetic recording medium is a thin magnetic metal film, the magnetic layer is apt to be influenced by surface properties of the non-magnetic substrate, such that the surface state of the non-magnetic substrate, that is micro-irregularities of the surface of the non-magnetic substrate, translates itself directly as micro-irregularities of the surface of the magnetic layer.

Thus, in a magnetic recording medium having a thin magnetic metal film, the fine shape on the magnetic layer needs to be optimized by controlling the surface shape of the non-magnetic substrate. If the spacing loss is to be reduced under such circumstances, the surface of the non-magnetic substrate needs to be smoothed. However, if, in the non-magnetic substrate, the surface of the thin magnetic metal film is smoothed, handling difficulties are presented in the manufacturing process.

SUMMARY OF THE INVENTION

It is therefore an object of the present invention to provide a magnetic recording medium having superior electro-magnetic conversion characteristics and running performance by controlling the surface shape of the surface of a polyester film as a non-magnetic substrate on which to deposit the thin magnetic metal film. It is a more specified object of the present invention to provide a magnetic recording medium capable of achieving a large recording capacity and which has superior running durability and handling characteristics.

For accomplishing these objects, the present invention provides a magnetic recording medium having at least a magnetic metal film formed on a major surface of a non-magnetic substrate, wherein the non-magnetic substrate at least has a first polyester film forming the other major surface, and a second polyester film formed on the first polyester film, the first polyester film containing inert particles coarser than inert particles contained in the second polyester film, and wherein the thickness of the non-magnetic substrate excluding that of the first polyester film is not less than 2.0 μm.

In this magnetic recording medium, the major surface of the non-magnetic substrate opposite to its major surface carrying the non-magnetic substrate is affected by the inert particles contained in the first polyester film. Therefore, in the present magnetic recording medium, the firstly-stated surface exhibits desired surface roughness. Moreover, in this magnetic recording medium, at least a second polyester film is provided between the first polyester film and the magnetic metal film. So, the effect of the coarser inert particles contained in the first polyester film is small insofar as the magnetic metal film forming major surface of the non-magnetic substrate is concerned. The result is the desired superior surface characteristics of the magnetic metal film.

That is, with the present magnetic recording medium, the magnetic metal film forming major surface of the non-magnetic substrate exhibits desired superior surface characteristics, while the opposite side major surface can be of desired surface characteristics. Thus, the present magnetic recording medium is superior in running performance and electro-magnetic conversion characteristics.

BRIEF DESCRIPTION OF THE DRAWINGS

Fig.1 is a cross-sectional view showing essential portions of a magnetic recording medium according to the present invention.

Fig.2 is a schematic view showing a structure of a vacuum deposition device of an uninterrupted take-up type used in forming a magnetic metal film.

Fig.3 is a schematic view showing a structure of a magnetron sputtering device used in forming a carbon protective film.

DESCRIPTION OF THE PREFERRED EMBODIMENTS

Referring to the drawings, preferred embodiments of a magnetic recording medium according to the present invention will be explained in detail.

A magnetic recording medium, embodying the present invention, has a non-magnetic substrate 1, a magnetic metal film 2 formed on a major surface 1a of the non-magnetic substrate 1, and a back-coating layer 3, formed on the other major surface 1b of the non-magnetic substrate 1. In this magnetic recording medium, the non-magnetic substrate 1 at least includes a first polyester film 4, having inert particles of a larger size and which constitutes the opposite major surface 1b, and a second polyester film 5 having inert particles of a smaller size and which is formed on the first polyester film 4. In this magnetic recording medium, the thickness of the non-magnetic substrate 1, barring that of the first polyester film 4, is not less than 2.0 μm

The non-magnetic substrate 1, the magnetic metal film 2 and the back-coating layer 3, as well as the binder and the additive used in these respective layers, are sequentially explained.

Non-magnetic Substrate 1

First, the non-magnetic substrate 1 is made up of the first polyester film 4 and the second polyester film 5, as described above. This non-magnetic substrate 1, constituted by the polyester film, is superior in physical properties, such as tensile strength, and is of a strength sufficient to withstand rupture etc even in case of an extremely thin entire film thickness. The material of the non-magnetic substrate 1 is preferably polyester and, in particular, such polyester mainly composed of linear polyester. Specified examples of the material of the non-magnetic substrate 1 include polyethylene terephthalate, polytetramethylene terephthalate, poly-1,4-cyclohexylene dimethylene terephthalate and polyethylene-2,6-naphthalene dicarboxylate.

Also, in this non-magnetic substrate, the polyester film is of a compound structure made up of at least two layers, without regard to whether the respective layers are of the same composition or different compositions. However, from the viewpoint of productivity, the respective layers are preferably of the same composition.

For forming the first and second polyester film 4 and 5, the crude liquid for the first polyester film 4 and that for the second polyester film 5 are layered by a conflux tube or in a mouthpiece, as disclosed for example in Japanese Laying-Open Patent H-56-162617.

As inert particles, added to the non-magnetic substrate 1, inorganic particles, such as fine particles of $SO_2$, $TiO_2$, $Al_2O_3$, $CaSO_4$, $BaSO_4$, $CaCO_3$, carbon black, zeolite and other metals, or organic high polymer materials, such as silicon particles, polyimide particles, cross-linked copolymer particles, cross-linked polyester particles or Teflon particles. Of these, the inorganic particles are preferred in view of thermal resistance.

The method for adding the inert particles may be enumerated by a method of previously dissolving the particles in a solvent as a slurry and using the resulting slurry as a solvent for polymerization or dilution, and a method of directly adding the inert particles to previously prepared crude liquids constituting the respective layers.

In this magnetic recording medium, the average particle size of the inert particles contained in the first polyester film 4 is larger than that of the inert particles contained in the second polyester film 5.

Specifically, the average particle size of the inert particles contained in the first polyester film 4 is preferably 0.05 to 1.5 μm and more preferably 0.1 to 0.5 μm. The amount of addition of the inert particles contained in the first polyester film 4 is preferably 0.05 to 2.0 wt% and more preferably 0.1 to 1.0 wt%.

By setting the average particle size and the amount of addition of the inert particles contained in the first polyester film 4 in this manner, the roughness of the surface of the first polyester film 4 on which the back-coating layer 3 is formed may be set to a desired value to improve handling properties of the magnetic recording medium. Moreover, the magnetic recording medium employing this non-magnetic substrate 1 is superior in its running properties such that it can be run in good conditions for an extended period of time.

In order to improve surface smoothness and lubricity of the thin magnetic metal film 2, the average particle size and the amount of addition of the inert particles contained in the second polyester film 5 are preferably 0.03 to 0.15 μm and 0.01 to 1 wt%, respectively. Moreover, the surface of the second polyester film 5 on which to form the thin magnetic metal film is preferably formed with projections at a density of $10^3$ to $10^5$/mm$^2$.

If the average particle size of the inert particles contained in the second polyester film 5 is less than 0.03 μm, it,is feared that sufficient projections are not formed to improve lubricity. If conversely the average particle size of the inert particles is larger than 0.15 μm, it is feared that the magnetic metal film is deteriorated in smoothness. If the amount of addition of the inert particles in the second polyester film is less than 0.01 wt%, it is feared that a sufficient number of projections to improve lubricity cannot be kept. If conversely the amount of addition of the inert particles in the second polyester film is larger than 1 wt%, the number of the projections tends to be excessive to affect the surface properties of the magnetic metal film.

Moreover, the total thickness of this non-magnetic substrate 1, barring the thickness of the first polyester film 4, is to be not less than 2.0 μm and preferably not less than 2.5 μm. In the present embodiment, the non-magnetic substrate 1 is made up of the first and second polyester films 4 and 5, the total thickness of this non-magnetic substrate 1 barring the thickness of the first polyester film 4 is synonymous as the thickness of the second polyester film 5.

In the present invention, the non-magnetic substrate is not limited to this configuration and may be made up of three or more polyester films. In such case, the total thickness of this non-magnetic substrate 1 barring the thickness of the first polyester film 4 means the thickness of the non-magnetic substrate 1 barring the thickness of the polyester film providing a surface on which to form the back-coating layer 3.

By setting the total thickness of the non-magnetic substrate 1 barring the thickness of the first polyester film 4 to not less than 2.0 μm, it is possible to minimize the effect of the coarser inert particles contained in the first polyester film 4 on the surface of the second polyester film 5. Stated differently, by setting the total thickness of the non-magnetic substrate 1 barring the thickness of the first polyester film 4 to not less than 2.0 μm, it is possible to prevent deterioration of surface properties (inundations) of the second polyester film 5, formation of voids in the second polyester film 5 or formation of coarse projections on the surface of the second polyester film 5. So, the magnetic metal film 2, formed on this second polyester film 5, has desirable surface properties and superior electro-magnetic conversion characteristics and suffers from decreased dropout to assure high operational reliability.

Moreover, in this non-magnetic substrate 1, the number of coarse projections not less than 0.12 μm in height, produced on its major surface on which to form the magnetic metal film 2, is preferably not larger than 250/100 cm$^2$ and more preferably not larger than 200/cm$^2$. Meanwhile, these coarse projections can be measured by a 3D-MIRAU method applied to the major surface of the non-magnetic substrate 1.

By setting the number of the coarse projections with a height not less than 0.12 μm in height, on the major surface of the non-magnetic substrate 1 on which to form the magnetic metal film 2, surface properties of the magnetic metal film 2 are less likely to be deteriorated owing to these coarse projections. As a result, the projections etc possibly leading to dropout can be diminished in the present magnetic recording medium.

Moreover, the surface roughness (SRa) of the major surface of the non-magnetic substrate 1 on which to deposit the magnetic metal film 2 is preferably 1.5 to 5.0 nm and more preferably 2.0 to 3.5 nm. This surface roughness (SRa) may be adjusted by the size or the amount of addition of the inert particles added to the second polyester film 5 or by the layered structure of the non-magnetic substrate 1. With the surface roughness (SRa) of 1.5 to 5.0 nm of the major surface of the non-magnetic substrate 1, on which to deposit the magnetic metal film 2, it is possible to procure optimum electro-magnetic conversion characteristics and running durability of the magnetic recording medium.

In addition, with the present non-magnetic substrate 1, surface inundations on its major surface, on which to form the magnetic metal film 2, are preferably not larger than 2.5 nm and more preferably not larger than 2.0 nm. These surface inundations can be measured by FFT (fast Fourier transform) analysis of data obtained on measuring the surface roughness SRa. That is, by FFT analysis of data obtained on measuring SRa, and by finding the values of amplitudes with a wavelength value not larger than 20 $\mu$m, surface inundations on the major surface of the non-magnetic substrate 1 are measured. By setting the surface inundations of the major surface of the magnetic metal film 2 in this manner, it is possible to realize satisfactory electro-magnetic conversion characteristics and the running durability of the magnetic recording medium.

Also, the surface of the non-magnetic substrate 1, on which to form the back-coating layer 3, has its surface roughness SRa adjusted by the size and the amount of addition of inert particles added to the first polyester film 4. This surface roughness SRa is preferably as large as possible in view of ease in handling in the manufacturing process. However, if this surface roughness SRa is excessive, the effect of set-off on taking up a completed magnetic metal film 2 to a roll is excessive. Therefore, the surface roughness SRa is set to 4 to 15 nm and preferably to 5 to 10 nm.

If this non-magnetic substrate 1 is of a thickness of 2.5 to 7.0 $\mu$m, the required strength can be achieved. In addition, the magnetic recording medium can be reduced in thickness to cope with the demand to increase the recording capacity.

Furthermore, the major surface of the non-magnetic substrate 1 on which to form the magnetic metal film 2 is preferably formed with projections to a density of $10^3$ to $10^5$/mm$^2$.

By forming projections at a density of $10^3$ to $10^5$/mm$^2$ on the major surface of the non-magnetic substrate 1, desirable surface properties may be imparted to the magnetic metal film. Stated differently, by forming projections at a density of $10^3$ to $10^5$/mm$^2$ on the major surface of the non-magnetic substrate 1, the magnetic metal film 2 may be of a desired surface roughness, whereby the magnetic recording medium is superior in running performance and in electro-magnetic conversion characteristics.

Magnetic Metal Film 2

The magnetic metal film 2 is deposited on the second polyester film 5 on the non-magnetic substrate 1.

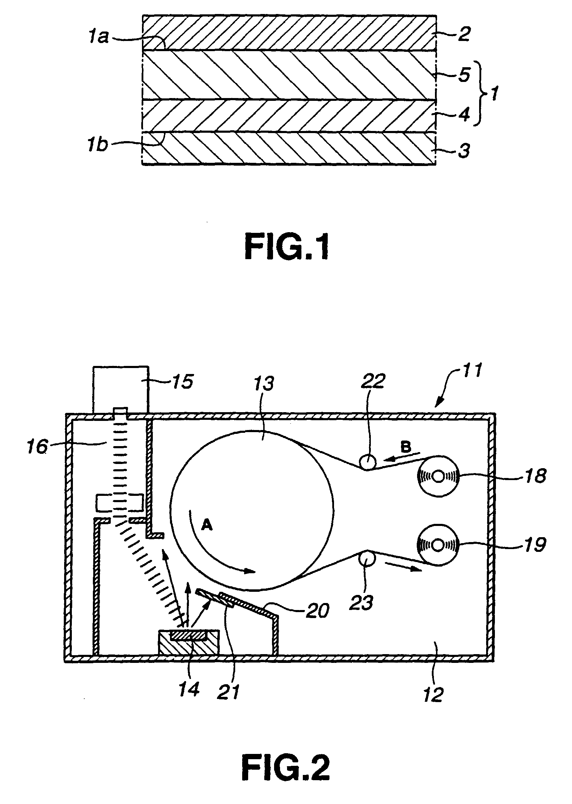

The magnetic metal film 2 is formed using e.g., an uninterrupted take-up type vacuum deposition device shown for example in Fig.2.

This vacuum deposition device 11 is designed for so-called oblique vapor deposition and includes a vacuum chamber 12 within which a cooling can 13 and a vapor deposition source 14 for the magnetic metal film 2 are arranged so that the cooling can 13 and the vapor deposition source 14 face each other. The interior of the vacuum chamber 12 is set to a vacuum of the order of e.g., approximately $10^{-3}$ Pa and the cooling can 13 is adapted for being rotated in the counterclockwise direction as indicated by arrow A.

The vapor deposition source 14 comprises a vessel, such as a crucible, and a magnetic metal material, such as Co, arranged therein. This vapor deposition source 14 is irradiated with an accelerated electron beam 16 from an ion beam generator 15 for heating and vaporizing the magnetic metal material which then is deposited (vapor-deposited) on the non-magnetic substrate 1 running along the peripheral surface of the cooling can 13 to form the magnetic metal film 2. The non-magnetic substrate 1, now carrying the magnetic metal film 2, is then wound on a take-up roll 19.

An anti-deposition plate 20 is provided between the vapor deposition source 14 and the cooling can 13 and a shutter 21 is movably mounted on the anti-deposition plate 20 to permit only vapor-deposition particles incident at a pre-set angle relative to the non-magnetic substrate 1 to be passed through the anti-deposition plate 20. The magnetic metal film 2 may be formed in this manner by the oblique vapor deposition method.

It is noted that guide rolls 22, 23 are provided between a supply roll 18 and the cooling can 13 and between the cooling can 13 and the take-up roll 19, respectively, to apply a pre-set tension to the non-magnetic substrate 1 running from the supply roll 18 via the cooling can 13 and the take-up roll 19 to permit smooth running of the non-magnetic substrate 1.

During this vapor deposition of the magnetic metal film 2, an oxygen gas is supplied through an oxygen gas inlet, not shown, onto the surface of the non-magnetic substrate 1. This helps improve magnetic properties, durability and weatherability of the magnetic metal film 2. For heating the vapor deposition source 14, any suitable well-known means, such as resistance heating means, high frequency heating means or laser heating means, may be used in addition to the above-mentioned electron beam heating means.

Although an example of forming a film of a magnetic metal material, such as Co, by the oblique vapor deposition method, any suitable well-known thin film forming methods, such as a perpendicular vapor deposition method or a sputtering method, may be used in addition to the oblique vapor deposition method. The magnetic metal material may be Ni, Fe or an alloy thereof, in addition to Co. However, in order to improve deposition strength to the non-magnetic substrate 1, or durability and abrasion resistance of the magnetic metal film 2 itself, it is desirable to use the oxygen-containing magnetic metal film 2, obtained when using a vapor deposition atmosphere having an oxygen gas as a dominant gas. The thickness of the magnetic metal film 2 is on the order of 0.01 to 0.2 μm and preferably 0.1 to 0.2 μm.

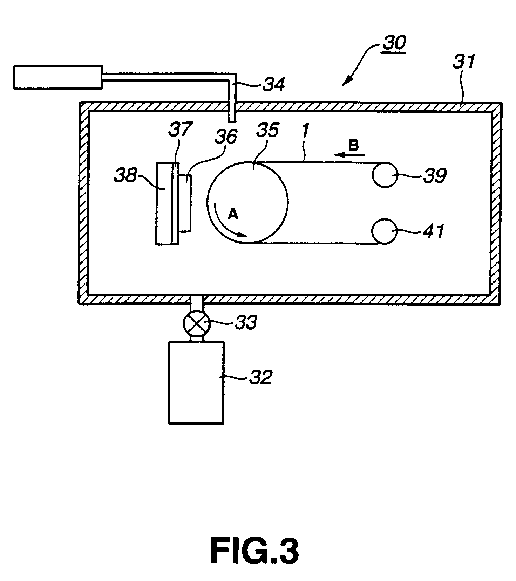

For preventing abrasion of the magnetic metal film 2 of the magnetic recording medium, a carbon protective film is preferably deposited on the magnetic metal film 2, using e.g., a magnetron sputtering device 30 shown in Fig.3.

This magnetron sputtering device 30 has its outer side covered by a chamber 31, the inside of which is kept to a vacuum degree of approximately 0.8 Pa by evacuation with a vacuum pump 32 to approximately $10^{-4}$ Pa, throttling the angle of a valve 33 for discharging to the vacuum pump 32 from the fully open state to 10° to lower the discharging velocity and by subsequently introducing an Ar gas from a gas inlet tube 34 to set the degree of vacuum to approximately 0.8 Pa.

Within the chamber 31 of the magnetron sputtering device 30, there are provided a cooling can 35 and a target 36 arranged facing the cooling can 35. This cooling can 35 is cooled to e.g., -40° and rotated counterclockwise as indicated by arrow A.

The target 36 supplies a material of a carbon protective film and is supported by a backing plate 37 operating as a cathode electrode. On the back side of this backing plate 37 is mounted a magnet 38 for establishing a magnetic field. When forming a carbon protective film by this magnetron sputtering device 30, an Ar gas is introduced via this gas inlet tube 34. Using the cooling can 35 and the backing plate 37 as an anode and as a cathode, respectively, an electrical voltage of approximately 3000 V is applied to maintain the state in which there flows the electric current of 1.4 A.

By applying the electrical voltage, the Ar gas is in a plasma state to yield ions which collide against the target 36 to expel atoms of the target 36. Since a magnet 38 is provided on the back side of the backing plate 37, and a magnetic field is formed in the vicinity of the target 36, the ions thus generated are collected in the vicinity of the target 36.

The atoms expelled from the target 36 are routed in the direction indicated by arrow B from a supply roll 39 rotating counterclockwise in Fig.2, so as to be deposited on the non-magnetic substrate 1, having the magnetic metal film 2 deposited thereon and which is kept running around the peripheral surface of the cooling can 35, thus forming a carbon protective film. The non-magnetic substrate 1, now carrying the carbon protective film, is taken up on the take-up roll 41.

This carbon protective film preferably has a thickness of approximately 3 to 15 nm and in particular to approximately 5 to 10 nm in order to achieve the effect of prohibiting abrasion of the magnetic metal film 2.

In the foregoing, explanation has been made of a case of forming a carbon protective film by magnetron sputtering. For forming the carbon protective film, any suitable known thin-film forming methods, such as ion beam sputtering, ion beam sputtering or a CVD method, may be used in addition to the above-described method.

With the present magnetic recording medium, a lubricating agent is preferably provided on the surface of the carbon protective film. This further improves the effect of the running performance relevant to the shape of the fine projections.

Moreover, with the present magnetic recording medium, variable additives, such as rust-proofing agents, anti-static agents or fungicides, may be provided, by known means, on or in the vicinity of the front or back sides of the magnetic recording medium, in the voids within the magnetic metal film 2, in an interface between the carbon protective film and the magnetic metal film 2, in an interface between the magnetic metal film 2 and the non-magnetic substrate 1 or within the non-magnetic substrate 1.

Back-coating layer 3

The back-coating layer 3 is provided on the opposite surface to the surface carrying the magnetic metal film 2 of the non-magnetic substrate 1. This back-coating layer 3 is mainly composed of a binder, carbon black and inorganic powders. Specifically, the inorganic powders may be enumerated by calcium carbonate and inorganic powders with a Moh's hardness of 5 to 9.

In the back-coating layer 3, the carbon black of two sorts with different average particle sizes is preferably employed. In such case, the fine particulate carbon black with an average particle size of 10 to 20 nm and coarser carbon black particles with an average particle size of 230 to 300 nm are preferably used, insofar as the average particle size is concerned.

In general, by adding the fine particulate carbon black, as described above, it is possible to set the surface electrical resistances of the back-coating layer 3 and the light transmittance to respective lower values. In certain magnetic recording devices, the light transmittance of the tape is used as an operating signal. In such case, addition of the fine particulate carbon black is particularly effective.

On the other hand, the fine particulate carbon black is generally superior in its lubricant holding power and hence may be used in combination with the lubricant to decrease the frictional coefficient.

The coarse carbon black, with an average particle size of 230 to 320 nm, has the function as a solid lubricant, and forms minute projections on its surface, as a result of which the contact area and the frictional coefficient can be decreased. However, on an aggressive running system, the coarser carbon black tends to drop from the back-coating layer, thus possibly leading to an increased error rate.

Specifically, the fine particulate carbon black may be enumerated by RAVEN 2000B (18 nm), RAVEN 1500B (17 nm), both manufactured by COLUMBIA CARBON INC., BP800 (17 nm), manufactured by CABBOT INC., PRINTEX 90 (14 nm), PRINTEX 95 (15 nm), PRINTEX 85 (16 nm), PRINTEX 75 (17 nm), manufactured by DEGSA INC., and #3950 (16 nm), manufactured by MITSUBISHI KASEI KOGYO KK. The coarser carbon black may be enumerated by THERMAL BLACK (270 nm) manufactured by KAHN KARB INC. and RAVEN MTP (275 nm) manufactured by COLUMBIA CARBON INC.

If two sorts of the carbon black with different average particle size are used in the back-coating layer 3, the content ratio by weight of the fine particulate carbon black with 10 to 20 nm in size to the coarser carbon black with 230 to 320 nm in size is such that the fine particulate carbon black : coarser carbon black ratio is preferably 98:2 to 75:25 and more preferably 95:5 to 85:15. The content in the back-coating layer 3 of the carbon black is usually 30 to 80 weight parts and preferably 45 to 65 weight parts to 100 parts of the binder. It is noted that the content of carbon black means the sum of the content of fine particulate carbon black and that of coarser carbon black if these are used in combination.

On the other hand, if the inorganic powders with the Moh's hardness of 5 to 9 are used, it is possible to impart the repetitive running durability to the magnetic recording medium to fortify the back-coating layer 3. If these inorganic powders are used along with the aforementioned carbon black or calcium carbonate, the back-coating layer 3, subjected to repetitive sliding, is deteriorated only to a lesser extent by the filler effect of the inorganic powders to assure the strong back-coating layer 3.

If the inorganic powders used in the back-coating layer 3 are, of the Moh's hardness of 5 to 9, a moderate abrasive force is produced on the surface of the back-coating layer 3 to decrease the adhesion to the guide pole etc. If calcium carbonate and inorganic powders are used in combination for the back-coating layer of the magnetic recording medium, it is possible to improve sliding characteristics with respect to e.g., a guide pole having a rough surface to improve the frictional coefficient of the back-coating layer 3. Meanwhile, the inorganic powders with an average particle size of 80 to 250 nm and preferably 100 to 210 nm are preferably used.

These inorganic powders may be enumerated by, for example, $\alpha$-iron oxide, $\alpha$-alumina and chromium oxide ($Cr_2O_3$). Of these, $\alpha$-iron oxide and $\alpha$-alumina are preferred. The content of the inorganic powders with the Moh's hardness of 5 to 9 is usually 3 to 30 weight parts and preferably 3 to 20 weight parts to 100 weight parts of the carbon black. In particular, two sorts of carbon black with different average particle size, calcium carbonate of the aforementioned particle size and the inorganic powders with the aforementioned specified Moh's hardness are preferably contained in the back-coating layer 3.

It is possible to have the lubricant contained in the back-coating layer 3. The lubricant may be enumerated by, for example, a fatty acid or a fatty acid ester, as discussed above. The fatty acid may be enumerated by, for example, a fatty carboxylic acid, such as acetic acid, propionic acid, octanoic acid, 2-ethylhexanoic acid, lauric acid, myristic acid, stearic acid, palmitic acid, behenic acid, arachic acid, oleic acid, linolic acid, linoleic acid, elaidic acid and palmitoleic acid and mixtures thereof.

The fatty acid ester may, for example, be a variety of ester compounds, such as butyl stearate, sec-butyl stearate, isopropyl stearate, butyl oleate, amyl stearate, 3-methyl butyl stearate, 2-ethyl hexyl stearate, 2-hexyl decyl stearate, butyl palmitate, 2-ethyl hexyl myristate, butyl stearate-butyl palmitate mixture, oleyl oleate, butoxy ethyl stearate, 2-butoxy-1-propyl stearate, dipropylene glycol monobutyl ether acylated with stearic acid, diethylene glycol dipalmitate, hexamethylene diol acylated with myristic acid to diol, and glycerine oleate. These may be used alone or in combination.

In the back-coating layer 3, the lubricant is preferably added in an amount usually of 1 to 5 weight parts to 100 weight parts of the binder resin.

The back-coating layer 3 used in the back-coating layer 3 may be enumerated by, for example, a thermoplastic resin, a thermosetting resin, a reactive resin and mixtures thereof.

Examples of the thermoplastic resin include polymers or copolymers containing, as constituent units, vinyl chloride, vinyl acetate, vinyl alcohol, maleic acid, acrylic acid, acrylic acid ester, vinylidene chloride, acxylonitrile, methacrylic acid, methacrylic acid ester, styrene, butadiene, ethylene, vinyl butyral, vinyl acetal, and vinyl ether. The copolymer may be enumerated by, for example, a vinyl chloride-vinyl acetate copolymer, vinyl chloride-vinylidene chloride copolymer, vinyl chloride-acrylonitrile copolymer, acrylic acid ester-acrylonitrile copolymer, acrylic acid ester-vinylidene chloride copolymer, acrylic acid ester-styrene copolymer, methacrylic acid ester-acrylonitrile copolymer, methacrylic acid ester-vinylidene chloride copolymer, methacrylic acid ester-styrene copolymer, vinylidene chloride-acrylonitrile copolymer, butadiene-acrylonitrile copolymer, styrene-butadiene copolymer and chlorovinyl ether-acrylic acid ester copolymer. There may also be recited polyamide resin, cellulose based resins, such as cellulose acetate butyrate, cellulose diacetate, cellulose propionate or nitrocellulose, polyvinyl fluoride, polyester resin, polyurethane resin and a variety of rubber-based resins.

Examples of thermosetting resin or reactive resin include phenolic resins, epoxy resins, polyurthane cured resin, urea resin, melamic resin, alkyd resin, aclyric reactive resin, formaldehyde resin, silicone resin, epoxy-polyamide resin, polyester resin-polyisocyanate prepolymer mixture, polyester polyol-polyisocyanate mixture and polyurethane-polyisocyanate mixtures.

The binder is preferably used in a range of 5 to 100 weight parts, preferably 10 to 80 weight parts, to 100 weight parts of non-magnetic powders of the back-coating layer 3.

The binder for the magnetic layer 2 and the non-magnetic substrate 1 may preferably be at least one resin selected from the group consisting of a vinyl chloride resin, vinyl chloride-vinyl acetate copolymer, vinyl chloride-vinyl acetate-vinyl alcohol copolymer, vinyl chloride-vinyl acetate-maleic anhydride copolymer, and nitrocellulose, in combination with a polyurethane resin or further in combination with polyisocyanate. The aforementioned polyurethane resin may be any known resin having the structure of polyester polyurethane, polyether polyurethane, polyether polyesterpolyurethane, polycarbonate urethane, polyester polycarbonate polyurethane, and polycaprolactone polyurethane.

Into the above-mentioned binder, it is desirable to introduce at least one polar group, selected from the group consisting of -COOM, -SO$_3$M, -P=O(OM)$_2$, -O-P=O (OM)$_2$, where M denotes a hydrogen atom or an alkali metal base, -OH, -NR$_2$, -N$^+$R$_3$, where R denotes a hydrocarbon group, an epoxy group, -SH and -CN, by copolymerization or addition reaction, as appropriate, in order to improve dispersion characteristics and durability. These polar groups are introduced in an amount preferably of $10^{-1}$ to $10^{-8}$ mol/g and more preferably of $10^{-2}$ to $10^{-6}$ mol/g.

The polyisocyanates contained in the binder may be isocyanates, such as, for example, tolylene, diisocyanate, 4-4'-diphenyl methane diisocyanate, hexamethylene diisocyanate, xylilene diisocyanate, naphthylele-1,5-diisocyanate, o-toluidine diisocyanate, isophorone diisocyantate and triphenyl methane diisocyanate, products of these isocyanates with polyalcohols and polyisocyanates generated on condensation of isocyanates.

The aforementioned binder is used in an amount of 5 to 50 weight parts, preferably 10 to 30 weight parts, to 100 weight parts of magnetic powders of the magnetic layer 2 or non-magnetic powders of the non-magnetic substrate 1. If the vinyl chloride resin, polyurethane resin and polyisocyanate are used as a binder in combination with the magnetic layer 2 or the non-magnetic substrate 1, 5 to 70 wt% of a vinyl chloride resin, 2 to 50 wt% of the polyurethane resin and 2 to 50 wt% of polyisocyanate are preferably contained in the total binder.

The binder used for the magnetic layer 2 is preferably of the same composition as the binder used for the non-magnetic substrate 1. By using the same composition of the binder used for the magnetic layer 2 as that used for the non-magnetic substrate 1, the non-magnetic substrate 1 and the magnetic layer 2 may be improved in homogeneity in the composition, with the result that the magnetic recording medium suffering from defects to a lesser extent may be produced.

Additives

The additives may be a dispersion agent added to the coating liquid for forming the back-coating layer 3 for satisfactorily dispersing carbon black or the non-magnetic powders in the binder. The additives may be enumerated by electrically conductive particles (anti-static agents) or mold-proofing agents, other than plasticizers or carbon black, that may be added as necessary.

The dispersion agents used may be C12 to C18 fatty acids RCOOH, where R is C11 to C17 alkyl or alkenyl group, such as caprylic acid, capric acid, lauric acid, myristic acid, palmitic acid, stearic acid, behenic acid, oleic acid, elaidic acid, linolic acid, linoleic acid or stearolic acid, metal soap composed of alkali metal or alkali earth metal of the aforementioned fatty acids, compounds containing fluorine of the aforementioned fatty acid esters, amids of the aforementioned fatty acids, polyalkylene oxide alkyl phosphoric acid esters, lecithin, trialkyl polyolefinoxy quaternary ammonium salts, with the alkyl being of C1 to C5 and with olefins being ethylene, propylene etc, sulfates and copper phthalocyanine. These may be used alone or in combination. In particular, copper oleinate, copper phthalocyanine and barium sulfate are used preferably in combination for the back-coating layer 3. The dispersion agent is added in an amount of 0.5 to 20 weight parts to 100 weight parts of the binder resin.

Examples

The present invention will be further explained in detail with reference to Examples and Comparative Examples. Meanwhile, various physical values and characteristics have been measured by the methods as hereinafter explained.

Measurement of Film Thicknesses

The film thickness was measured using a microtome method in which a fragment of a film section was taken and imaged by a transmission electron microscope (TEMPERATURE) at ten places with a multiplication factor of 10,000. An average value often sites was found as used as the film thickness.

Measurement of Surface Roughness

The surface roughness SRa is defined by the following equation:

$$SRa = 1/\, LxLy \int\limits_{0}^{Lx} \int\limits_{0}^{Ly} |f(x,y)|\,dxdy$$

where Lx is a measured length in the X direction and Ly is the measured length in the Y direction.

In measuring the surface roughness SRa of the back-coating layer forming surface, a surface roughness measurement unit, manufactured by KOSAKA KENKYUSHO under the trade name of"ET-30HK", was used, and measurement was made under the conditions of a contact needle diameter of 2 $\mu$mR, a contact needle pressure of 10 mg, a cut-off value of 0.25 mm, an X-direction measurement length of 0.8 mm and a Y-direction measurement length of 0.12 $\mu$m.

In measuring the surface roughness SRa of the magnetic metal film forming surface, measurement was made by a non-contact system using a surface roughness measurement unit "ET-30HK" manufactured by KOSAKA KENKYUSHO, under the conditions a cut-off value of 0.08 mm, an X-direction measurement length of 0.1 mm and a Y-direction measurement length of 0.02 $\mu$m. It is noted that measurement in such case is used in general in measuring the surface roughness of a highly planar surface, and specifically, is the measurement by the optical design displacement sensor exploiting a critical angle focal point error detection system.

Number of Magnetic Layer Forming Surface Projections

The number of the projections formed by adding inert particles into a polyester film was counted, using a high scanning electron microscope (SEM), at a multiplication factor of not less than 5000, and calculated as a number per 100 cm$^2$.

The characteristics of the magnetic recording medium in the Examples and Comparative Examples were evaluated using a remodelled product of AITR drive SDX-S300C manufactured by SONY CORPORATION. The recording was at a relative velocity of 10.04 m/sec and the shortest recording wavelength of 0.35 $\mu$m.

Measurement of Dropout

The dropout was measured for one minute by a dropout counter by counting dropouts continuing for not less than 1 $\mu$sec with an output attenuation of 6 dB.

Running Durability

The running durability was evaluated in terms of an error rate after one pass running and after 100 pass running, by running the tape a length of 170 m by 100 passes.

Example 1

First, a slurry was prepared by dispersing dry silica particles of an average particle size of 0.1 $\mu$m in N-methyl-2-pyrrolidone (NMP). Next, a polymer solution for a layer on the magnetic metal film forming side, that is the second polyethylene terephthalate film, termed a liquid A, was prepared. The content of the particles was 0.1 wt% based on the weight of polyethylene terephthalate.

By a similar method, a layer on the back coat forming surface, containing 0.05 wt% of silica particles with an average particle size of 1.5 $\mu$m based on the weight of polyethylene terephthalate, that is the first polyethylene terephthalate film, termed a liquid B, was prepared.

The solution viscosity of both the liquids A and B at the polymer concentration of 10 wt% and at 30°C was adjusted to 3000 poise for use as a crude liquid for film formation.

These liquids A and B were passed through a filter cut to 5 μm and were allowed to flow in two layers on a metal belt to fabricate a film. The amount of extrusion of the liquid A was equated to that of the liquid B and adjusted so that the thickness of the ultimate film will be 5 μm. The film material, thus allowed to flow, was heated for two minutes by hot air of 180°C and the solvent was vaporized off to produce a film having self-retention characteristics. This film then was peeled off continuously from the belt.

The film then was introduced into a water tank having a NMP concentration gradient and an inorganic salt yielded on neutralization with a residual solvent was extracted with water. The water content was dried off by a tenter and heat treatment was then carried out. The film was stretched in the longitudinal and width-wise directions by a factor of 1.1 and a factor of 1.5, respectively, and heat treatment was then carried out at 280°C for 1.5 minute. The resulting film was cooled gradually at a velocity of 20°C per sec to a non-magnetic substrate of a biaxially stretched polyethylene terephthalate film.

Using the non-magnetic substrate, prepared as described above, a crude magnetic tape sheet was prepared by the following technique:

A vapor-deposition device of an uninterrupted take-up type, shown in Fig.2, was evacuated so that its interior will be of a vacuum of the order of $10^{-3}$ Pa, and the non-magnetic substrate was set on this vacuum deposition device. A magnetic metal film of Co was then formed on the surface of a second polyethylene terephthalate film on the non-magnetic substrate in the presence of a trace amount of oxygen by a continuous vacuum oblique deposition method. By adjusting the intensity of the electron beam, the incident angle for vacuum deposition was adjusted so that the normal line direction of the non-magnetic substrate will be 90 to 45° and so that the running speed of the non-magnetic substrate will be 50 m/min, with the thickness of the magnetic metal film will be 0.18 μm.

The inside of the magnetron sputtering device, shown in Fig.3, was evacuated so that its inside will be of the vacuum of the order of $10^{-4}$ Pa. An Ar gas then was introduced to set a pressure of approximately 0.8 Pa. In this magnetron sputtering device was set the non-magnetic substrate carrying the magnetic metal film and was run on a cooling can cooled to -40°C at a velocity of 5 m/min to form a carbon protective film on the magnetic metal film.

Next, a back paint was prepared by the following composition:

Composition of Back Paint

| carbon black, 50 prepared by ASAHI CO., LTD. | 100 weight parts |
| --- | --- |
| polyester polyurethane (manufactured by NIPPON POLYURETHANE CO., LTD. under a trade name of N-23014) | 100 weight parts |
| solvent: methylethylketone | 500 weight parts |
| toluene | 500 weight parts |

Then, perfluoro polyether as a lubricant was coated to a thickness of approximately 10 nm on the surface of the magnetic metal film.

The crude tape sheet, comprising a non-magnetic substrate carrying the magnetic metal film and the back-coating layer, was slit to strips each with a width of 8mm. Each strip was accommodated in a main cassette body portion to prepare a cassette tape sample.

Examples 2 and 3

In the Examples 2 and 3, magnetic tape samples were prepared in the same way as in Example 1, except that the non-magnetic substrate was prepared so that, by increasing and decreasing the amounts of extrusion of the liquids A and B, respectively, the total thickness of the non-magnetic substrate is 5 μm.

As a result, the thickness of the second polyethylene terephthalate film is 2.2 μm in the Example 2, whereas, in the Example 3, the thickness of the second polyethylene terephthalate film is 3.0 μm.

Example 4

In Example 4, a magnetic tape sample was prepared in the same way as in Example 1, except using silica particles, with an average particle size of 0.5 μm, for addition to the liquid B, with its amount being 0.1 wt%.

Examples 5 and 6

In the Examples 5 and 6, magnetic tape samples were prepared in the same way as in Example 1, except that the non-magnetic substrate was prepared so that, by increasing and decreasing the amounts of extrusion of the liquids A and B, respectively, the total thickness of the non-magnetic substrate will be 5 μm.

As a result, the thickness of the second polyethylene terephthalate film is 2.5 μm in the Example 2, whereas, in the Example 3, the thickness of the second polyethylene terephthalate film is 3.1 μm.

Example 7

In Example 4, a magnetic tape sample was prepared in the same way as in Example 1, except using silica particles, with an average particle size of 0.5 μm, for addition to the liquid B, with its amount being 2 wt%.

Examples 8 and 9

In the Examples 8 and 9, magnetic tape samples were prepared in the same way as in Example 1, except that the non-magnetic substrate was prepared so that, by increasing and decreasing the amounts of extrusion of the liquids A and B, respectively, the total thickness of the non-magnetic substrate will be 5 μm.

As a result, the thickness of the second polyethylene terephthalate film is 2.8 μm in the Example 8, whereas, in the Example 9, the thickness of the second polyethylene terephthalate film is 3.5 μm.

Comparative Example 1

In the Comparative Example 1, a magnetic tape sample was prepared in the same way as in Example 1, except that the non-magnetic substrate was prepared so that, by decreasing and increasing the amounts of extrusion of the liquids A and B, respectively, the total thickness of the non-magnetic substrate is 5 μm.

As a result, the thickness of the second polyethylene terephthalate film is 1.8 μm in the Comparative Example 1.

Comparative Example 2

In the Comparative Example 1, a magnetic tape sample was prepared in the same way as in Example 1, except that the non-magnetic substrate was prepared so that, by decreasing and increasing the amounts of extrusion of the liquids A and B, respectively, the total thickness of the non-magnetic substrate is 5 μm.

As a result, the thickness of the second polyethylene terephthalate film is 1.5 μm in the Comparative Example 2.

Comparative Example 3

In the Comparative Example 3, a magnetic tape sample was prepared in the same way as in Example 7, except that the non-magnetic substrate was prepared so that, by decreasing and increasing the amounts of extrusion of the liquids A and B, respectively, the total thickness of the non-magnetic substrate is 5 μm.

As a result, the thickness of the second polyethylene terephthalate film is 1.0 μm in the Comparative Example 3.

Evaluation of Characteristics

In the Examples 1 to 9 and in the Comparative Examples 1 to 3, prepared as described above, the surface roughness SRa of the magnetic metal film forming surface of the non-magnetic substrate, maximum amplitude values of the inundations with a wavelength not larger than 20 μm and the density of coarse projections not less than 0.12 μm, were measured. The dropout and the error rate of the magnetic tape produced were also measured. These measured results are shown in Table 1.

Table 1

| | thickness of second polyethylene terephthalate film ($\mu$m) | surface roughness of magnetic metal film forming surface (nm) | surface roughness of back-coating layer forming surface (nm) | amplitude | number of coarse projections on magnetic metal film forming surface per 100 cm$^2$ | dropout | error rate after 1-pass running | error rate after 100-pass running |
|---|---|---|---|---|---|---|---|---|
| Ex.1 | 2.0 | 4.8 | 8 | 2.5 | 180 | 90 | $3\times10^{-3}$ | $6\times10^{-3}$ |
| Ex.2 | 2.2 | 3.6 | 8 | 2.1 | 160 | 68 | $2\times10^{-3}$ | $5\times10^{-3}$ |
| Ex.3 | 3.0 | 2.2 | 8 | 1.5 | 110 | 50 | $1\times10^{-3}$ | $2\times10^{-3}$ |
| Ex.4 | 2.0 | 4.6 | 8 | 2.3 | 200 | 90 | $4\times10^{-3}$ | $6\times10^{-3}$ |
| Ex.5 | 2.5 | 3.0 | 8 | 2.0 | 100 | 50 | $2\times10^{-3}$ | $3\times10^{-3}$ |
| Ex.6 | 3.1 | 1.9 | 8 | 1.5 | 85 | 45 | $1\times10^{-3}$ | $2\times10^{-3}$ |
| Ex.7 | 2.1 | 3.4 | 8 | 2.1 | 190 | 95 | $3\times10^{-3}$ | $5\times10^{-3}$ |

| | | | | | | | | |
|---|---|---|---|---|---|---|---|---|
| Ex.8 | 2.8 | 2.6 | ∞ | 1.5 | 85 | 50 | $2 \times 10^{-3}$ | $3 \times 10^{-3}$ |
| Ex.9 | 3.5 | 1.5 | ∞ | 1.2 | 75 | 45 | $1 \times 10^{-3}$ | $2 \times 10^{-3}$ |
| Co. Ex.1 | 1.8 | 5.7 | ∞ | 3.0 | 300 | 110 | $1 \times 10^{-2}$ | $3 \times 10^{-2}$ |
| Co. Ex.2 | 1.5 | 7.0 | ∞ | 3.5 | 380 | 180 | $3 \times 10^{-2}$ | $4 \times 10^{-2}$ |
| Co. Ex.3 | 1.0 | 11.0 | ∞ | 6.0 | 450 | 250 | $6 \times 10^{-2}$ | $8 \times 10^{-2}$ |

From the results, shown in Table 1, it is seen that, with the Comparative Examples 1 to 3, in which the thickness of the second polyethylene terephthalate film is less than 2.0 µm, surface properties of the magnetic metal film forming major surface are deteriorated due to effects of the coarser inert particles contained in the first polyethylene terephthalate film, and that, with Examples 1 to 9, superior surface properties are demonstrated.

It is also seen that, in the Examples 1 to 6, as compared to Comparative Examples 1 to 3, sufficient running performance is displayed, whilst the reliability, as evaluated from dropout, is also excellent. Thus, in a magnetic recording medium, superior running performance and reliability are displayed when the inert particles in the back-coating layer forming surface side layer, that is the first polyethylene terephthalate film, are coarser than the inert particles in the second polyethylene terephthalate film, and when the thickness of the second polyethylene terephthalate film is not less than 2.0 μm.

Samples 13 to 16

Then, four sorts of samples, that is samples 13 to 16, were prepared to check into damaged state of the magnetic tapes and the possible tape noise. The results are shown in Table 2. The samples 13 to 16 were prepared in the same way as in Example 1 except setting the various manufacturing conditions as also shown in Table 2.

Table 2

| | thickness of second polyethylene terephthalate film ($\mu$m) | surface roughness of magnetic metal film forming surface (nm) | surface roughness of back-coating layer forming surface (nm) | amplitude | number of coarse projections on magnetic metal film forming surface per 100 cm$^2$ | tape noise | tape damage |
|---|---|---|---|---|---|---|---|
| sample 13 | 2.8 | 2.5 | 8 | 1.6 | 120 | ○ | A |
| sample 14 | 2.0 | 5.0 | 8 | 2.2 | 200 | ○ | A |
| sample 15 | 4.0 | 1.0 | 8 | 1.0 | 170 | × | C |
| sample 16 | 0.8 | 10.0 | 8 | 6.0 | 400 | ○ | A |

A length equal to 170 m of the produced magnetic tape was run through 100 passes to evaluate the damaged state of the tape after running through 100 passes. For evaluating the damaged state of the tape, the tape surface was observed by a differential interference microscope. The possible occurrence of the noise of the magnetic tape when the tape was run was also checked. Among the symbols used, having the following meanings, only A indicated the allowed range.

A: no damages nor scraping chips on the magnetic tape surface;
B: damages are seen sparsely on the magnetic tape surface, while scraping chips are scarcely observed;
C: damages are observed on the entire magnetic tape surface, while scraping chips are also observed;
○: no magnetic tape noise; and
X: magnetic tape noise is produced.

From the results of Table 2, it is seen that magnetic tape damages are increased and scraping chips are also produced for the sample 15 only, and that tape noise also occurs for the sample 15 only. It is seen from this that tape damages are increased and scraping chips are also produced when surface roughness of the magnetic metal film forming surface of the non-magnetic substrate is too low. It is also seen that tape noise is produced when the surface roughness of the magnetic metal film forming surface of the non-magnetic substrate is too low. The reason is that, if the surface roughness of the magnetic metal film forming surface of the non-magnetic substrate is too low, the magnetic metal film surface is excessively smooth, as a result of which the contact area and hence the frictional resistance are increased.

Then, for checking into handling characteristics of a magnetic tape, three sorts of samples, namely samples 17 to 19, were prepared. These samples 17 to 19 were prepared in the same way as in Example 1 except setting the various manufacturing conditions as shown in Table 3. The handling characteristics were evaluated by observing the running performance of a crude tape sheet, carrying the magnetic metal film, when the tape was run at a rate of 100 m/sec in forming the back-coating layer. The results of the evaluation are also shown in Table 3.

Table 3

| | thickness of second polyethylene terephthalate film ($\mu$m) | surface roughness of magnetic metal film forming surface (nm) | surface roughness of back-coating layer forming surface (nm) | amplitude | number of coarse projections on magnetic metal film forming surface per 100 cm$^2$ | dropouts | handling characteristics |
|---|---|---|---|---|---|---|---|
| sample 17 | 2.0 | 4.8 | 3 | 2.5 | 170 | 90 | × |
| sample 18 | 2.3 | 3.5 | 5 | 2.2 | 150 | 90 | ○ |
| sample 19 | 2.1 | 4.8 | 25 | 2.4 | 180 | 150 | ○ |

Specifically, the following criteria of evaluation were used:

◯: no running troubles encountered; and

X: fluttering or running defects occurred during running.

It is seen from the results of Table 3 that handling characteristics are inferior only for the sample 17. It is seen from this that the handling characteristics are inferior if the surface roughness of the back-coating layer forming surface of the non-magnetic substrate is too small.

In the sample 19, the handling characteristics show optimum results, however, the number of dropouts is increased. It is seen from this that the higher the surface roughness of the back-coating layer forming surface, the better become the handling characteristics, however, the higher surface roughness of the back-coating layer forming surface of the non-magnetic substrate leads to increased effect of set-off (back transcription) on taking up the magnetic tape into a roll after forming the magnetic metal layer.

**Claims**

1.  A magnetic recording medium having at least a magnetic metal film formed on a major surface of a non-magnetic substrate,
    wherein

    said non-magnetic substrate at least has a first polyester film forming the other major surface and a second polyester film formed on said first polyester film, said first polyester film containing inert particles coarser than inert particles contained in said second polyester film, and wherein
    the thickness of said non-magnetic substrate excluding that of the first polyester film is not less than 2.0 μm.

2.  The magnetic recording medium according to claim 1 wherein the density of projections not less than 0.12 μm on said major surface of said non-magnetic substrate on which said magnetic metal film is formed is not larger than 250/100 cm$^2$.

3.  The magnetic recording medium according to claim 1 wherein the surface roughness SRa of said major surface of said non-magnetic substrate on which said magnetic metal film is formed is 1.5 to 5.0 nm.

4.  The magnetic recording medium according to claim 1 wherein the maximum amplitude of surface inundations of said major surface of said non-magnetic substrate on which said magnetic metal film is formed is not larger than 2.5 nm.

5.  The magnetic recording medium according to claim 1 wherein the average particle size of inert particles contained in said first polyester film is 0.05 to 1.5 μm.

6.  The magnetic recording medium according to claim 1 wherein the amount of the inert particles of said first polyester film is 0.05 to 2.0 wt%.

7.  The magnetic recording medium according to claim 1 wherein the thickness of said non-magnetic substrate is 2.5 to 7.0 μm.

8.  The magnetic recording medium according to claim 1 wherein the surface roughness SRa of said other major surface opposite to the major surface thereof on which said magnetic metal film is formed is 4 to 20 nm.

**FIG.1**

**FIG.2**

**FIG.3**